(19) Europäisches Patentamt / European Patent Office / Office européen des brevets

(11) **EP 4 411 855 A1**

(12) **EUROPEAN PATENT APPLICATION**
published in accordance with Art. 153(4) EPC

(43) Date of publication:
**07.08.2024  Bulletin 2024/32**

(21) Application number: **22876170.6**

(22) Date of filing: **27.09.2022**

(51) International Patent Classification (IPC):
*H01M 4/13* (2010.01)  *H01M 4/36* (2006.01)
*H01M 10/052* (2010.01)  *H01M 10/0566* (2010.01)

(52) Cooperative Patent Classification (CPC):
**H01M 4/13; H01M 4/36; H01M 10/052;
H01M 10/0566;** Y02E 60/10

(86) International application number:
**PCT/JP2022/035822**

(87) International publication number:
**WO 2023/054303 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021  JP 2021162327**

(71) Applicant: **Panasonic Intellectual Property
Management Co., Ltd.
Kadoma-shi, Osaka 571-0057 (JP)**

(72) Inventors:
• **YAMAMOTO, Rina**
  **Kadoma-shi, Osaka 571-0057 (JP)**
• **UKA, Youichirou**
  **Kadoma-shi, Osaka 571-0057 (JP)**
• **KATO, Yoshio**
  **Kadoma-shi, Osaka 571-0057 (JP)**

(74) Representative: **Novagraaf International SA
Chemin de l'Echo 3
1213 Onex, Geneva (CH)**

(54) **POSITIVE ELECTRODE FOR SECONDARY BATTERY, AND SECONDARY BATTERY**

(57)    A positive electrode for a secondary battery including a positive electrode current collector, and a positive electrode mixture layer containing a positive electrode active material and disposed on a surface of the positive electrode current collector in which the positive electrode mixture layer contains a first positive electrode active material having a compressive strength of 400 MPa or less, a second positive electrode active material having a compressive strength smaller than the compressive strength of the first positive electrode active material, and when the positive electrode mixture layer is zoned into a first region and a second region having the same thickness, the first positive electrode active material is contained more in the first region than in the second region, and the second positive electrode active material is contained more in the second region than in the first region is used.

FIG. 1

EP 4 411 855 A1

**Description**

[Technical Field]

The present disclosure relates to a secondary battery, and particularly relates to an improvement on a positive electrode used in a secondary battery.

[Background Art]

Secondary batteries, especially lithium-ion secondary batteries, have high output and high energy density and are, therefore, expected as power sources for small consumer applications, power storage devices, and electric cars.
Patent Literature 1 proposes a positive electrode for a secondary battery, including a positive electrode current collector, and a positive electrode mixture layer containing a positive electrode active material and disposed on a surface of the positive electrode current collector. The positive electrode mixture layer containing a first positive electrode active material having a compressive strength of 400 MPa or more, and a second positive electrode active material having a compressive strength of 250 MPa or less. The literature says that, when the positive electrode mixture layer is zoned into a first region and a second region having the same thickness, by differing the contents of the first positive electrode active material and the second positive electrode active material between the first region and the second region, in a secondary battery using this positive electrode for a secondary battery, high energy density and high cycle characteristics can be both achieved.

[Citation List]

[Patent Literature]

Patent Literature 1: International Publication WO2021/153397

[Summary of Invention]

[Technical Problem]

In a secondary battery, further studies are necessary on achieving both high energy density and high cycle characteristics.

[Solution to Problem]

In view of the above, one aspect of the present disclosure relates to a positive electrode for a secondary battery, including: a positive electrode current collector; and a positive electrode mixture layer containing a positive electrode active material and disposed on a surface of the positive electrode current collector, wherein the positive electrode mixture layer contains a first positive electrode active material having a compressive strength of 400 MPa or less, and a second positive electrode active material having a compressive strength smaller than the compressive strength of the first positive electrode active material, and when the positive electrode mixture layer is zoned into a first region and a second region having the same thickness, the first positive electrode active material is contained more in the first region than in the second region, and the second positive electrode active material is contained more in the second region than in the first region.
Another aspect of the present disclosure relates to a secondary battery, including: the above-described positive electrode for a secondary battery; a separator; a negative electrode facing the positive electrode for a secondary battery with the separator interposed therebetween; and a liquid electrolyte.

[Advantageous Effects of Invention]

According to the present disclosure, it is possible to realize a secondary battery in which high energy density and high cycle characteristics are both achieved.
While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic cross-sectional view showing a structure of a positive electrode for a secondary battery according to one embodiment of the present disclosure.
[FIG. 2] A partially-cutaway schematic oblique view of a secondary battery according to one embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.
The present disclosure encompasses a combination of matters recited in any two or more claims selected from plural claims in the appended claims. In other words, as long as no technical contradiction arises, matters recited in any two or more claims selected from plural claims in the appended claims can be combined.
In the following description, the term "comprise" or "include" is an expression including meanings of "comprise (or include)," "essentially consist of," and "consist of."
Secondary batteries include at least nonaqueous electrolyte secondary batteries such as lithium-ion batteries and lithium-metal secondary batteries.
A positive electrode for a secondary battery according to an embodiment of the present disclosure includes a positive electrode current collector, and a positive electrode mixture layer containing a positive electrode active material and disposed on a surface of the positive electrode current collector. The positive electrode mixture layer contains a first positive electrode active material having a compressive strength of 400 MPa or less, and a second positive electrode active material having a compressive strength smaller than that of the first positive electrode active material.
Here, when the positive electrode mixture layer is zoned into a first region and a second region having the same thickness, the first positive electrode active material is contained more in the first region than in the second region, and the second positive electrode active material is contained more in the second region than in the first region. That is, the first positive electrode active material and the second positive electrode active material have a concentration distribution in the thickness direction of the positive electrode mixture layer. In the first region, the concentration of the first positive electrode active material is high, and in the second region, the concentration of the second positive electrode active material is high. The concentration herein means the content by mass. The first region may contain substantially no second positive electrode active material. The second region may contain substantially no first positive electrode active material.
The first positive electrode active material hardly expands and contracts, and is hardly crushed. Therefore, when the first positive electrode active material is used as the positive electrode active material, the expansion and contraction of the positive electrode active material associated with charging and discharging are suppressed, and the crushing of the positive electrode active material is suppressed. As a result, the formation of a new surface that causes an electrochemical reaction including a side reaction can be suppressed, and the cycle retention rate can be improved. However, this is not enough to improve the capacity in order to obtain a battery with high energy density.
In one attempt to obtain a secondary battery with high energy density, the applied amounts of the positive and the negative electrode active material have been increased, so that material mixture layers are formed thick. In this case, typically, the positive electrode mixture layer is rolled in the production process of a positive electrode. When the positive electrode mixture layer is rolled, the positive electrode active material particles are brought close to each other and are partially crushed, and fine particles generated by crushing can fill the gaps between the active material particles. By this, a higher energy density can be obtained. However, since the first positive electrode active material is hardly crushed, it is difficult to obtain a battery with high energy density by using the first positive electrode active material only.
On the other hand, the second positive electrode active material is easily compressed as compared to the first positive electrode active material. Specifically, during rolling, fine particles generated by crushing of the second positive electrode active material fill the gaps between the second positive electrode active material particles, or the second positive electrode active material is deformed to fill the gaps between the second positive electrode active material particles, and consequently, the apparent volume is likely to decrease. Therefore, it is easy to obtain a secondary battery with high energy density. However, as a result of compression, it may become difficult for the liquid electrolyte to permeate into a deep part on the positive electrode current collector side of the positive electrode mixture layer, causing reduction in electrolyte permeability. This may result in difficulty in obtaining a battery with excellent cycle characteristics.

However, when the positive electrode mixture layer has the first region and the second region differing in the contents of the first positive electrode active material and the second positive electrode active material, the pressure applied to the positive electrode mixture layer during compression is dispersed, and the active material density in the positive electrode mixture layer can be appropriately increased. By this, a battery with high energy density can be obtained. This battery has favorable electrolyte permeability and is excellent in cycle characteristics.

The compressive strengths of the first positive electrode active material and the second positive electrode active material are both 400 MPa or less. The second positive electrode active material may be contained in the first region. The first positive electrode active material may be contained in the second region. In general, the first positive electrode active material and the second positive electrode active material can be distinguished by the differences in shape, size, and morphology based on a cross-sectional SEM photograph of the surface of the positive electrode mixture layer, or by performing compositional analysis (element mapping). In that case, the compressive strength is an average value measured for 20 or more positive electrode active material particles.

Alternatively, when both the first positive electrode active material and the second positive electrode active material are contained in the first region and/or the second region, the compressive strength is measured for each positive electrode active material particle in the positive electrode mixture layer, to determine a compressive strength distribution. In the compressive strength distribution, two peaks corresponding respectively to the first positive electrode active material and the second positive electrode active material will appear. By this, even in the case where the first positive electrode active material and the second positive electrode active material are constituted of the same material, or where discerning by SEM photography is difficult, they can be distinguished from each other and analyzed. The contours of the particles of the positive electrode active material in a SEM photograph are identified. The compressive strength of each particle of the positive electrode active material in a predetermined region is determined by a method described below, to determine a compressive strength distribution. When the compressive strength distribution has two peaks in the region of 400 MPa or less, this estimates the presence of the first positive electrode active material and the second positive electrode active material.

The compressive strength (minimum compressive strength) at which the distribution is minimal between the two peaks is determined. The active material having a compressive strength equal to or more than the minimal compressive strength and 400 MPa or less is regarded as the first positive electrode active material, and the average value of the compressive strength in the active material having a compressive strength equal to or more than the minimal compressive strength and 400 MPa or less is referred to as the compressive strength of the first positive electrode active material. The active material having a compressive strength less than the minimal compressive strength is regarded as a second positive electrode active material, and the average value of the compressive strength in the active material having a compressive strength less than the minimal compressive strength is referred to as the compressive strength of the second positive electrode active material.

In the present embodiment, since the compressive strengths of the first positive electrode active material and the second positive electrode active material are both 400 MPa or less, the positive electrode mixture layer is easily compressed as a whole, and a battery with high energy density is likely to be obtained.

The positive electrode mixture layer has, for example, a laminated structure of a first layer containing much first positive electrode active material and a second layer containing much second positive electrode active material. The first layer and the second layer may not necessarily have the same thickness. If there is a difference between the first layer and the second layer in the concentrations of the first positive electrode active material and the second positive electrode active material, when the whole of the first layer and the second layer is zoned into a first region and a second region having the same thickness, the concentrations of the first positive electrode active material and the second positive electrode active material differ between the first region and the second region.

When the compressive strength of the first positive electrode active material is as large as, for example, exceeding 400 MPa, and the difference in compressive strength is too large between the first positive electrode active material and the second positive electrode active material, a large compressive force may be applied between the first layer and the second layer, causing the positive electrode active material (e.g., the second positive electrode active material) to be crushed at the boundary between the first layer and the second layer, which may fill the gaps between the particles. This, as a result, may hinder the flow of the liquid electrolyte, to cause a deterioration in the cycle characteristics. In contrast, in the present embodiment, the compressive strengths of the first positive electrode active material and the second positive electrode active material are both 400 MPa or less. Therefore, the difference in compressive strength between the first positive electrode active material and the second positive electrode active material is also small, and the cycle characteristics can be maintained high. The difference in compressive strength between the first positive electrode active material and the second positive electrode active material may be, for example, 50 MPa or more and less than 150 MPa.

The compressive strength of the second positive electrode active material may be 150 MPa or less. On the other hand, the compressive strength of the first positive electrode active material may be 150 MPa or more, and may be 200 MPa or more.

The compressive strength of the second positive electrode active material may be, for example, 3/4 times or less as large as the compressive strength of the first positive electrode active material (in other words, the compressive strength of the first positive electrode active material may be 1.33 times or more as large as the compressive strength of the second positive electrode active material).

The compressive strength means, when referring to the primary particles, a compressive strength per one primary particle, and when referring to the secondary particles, a compressive strength per one secondary particle. The compressive strength (St) is calculated from the mathematical equation $St = 2.8P / \pi d^2$ (P: load applied to particles, d: particle diameter) described in "Journal of the Mining and Metallurgical Institute of Japan", volume 81, issue 932, published on December 1965, pages 1024 to 1030. Here, d represents the particle diameter of the secondary or primary particles, for which the particle diameter of the secondary particles is used when calculating the compressive strength of the secondary particles, and the particle diameter of the primary particles is used when calculating the compressive strength of the primary particles. The compressive strength of the primary or secondary particle selected by observation under a CCD or the like is measured using a micro compression tester.

The second region may be nearer to the positive electrode current collector than the first region. That is, the first positive electrode active material may be contained more on the positive electrode surface side than on the positive electrode current collector side, and the second positive electrode active material may be contained more on the positive electrode current collector side than on the positive electrode surface side. In this case, since the first region containing much first positive electrode active material with a high compressive strength is on the surface layer side of the positive electrode, the surface of the positive electrode is prevented from being occluded when the positive electrode expands and contracts during discharging, and the liquid electrolyte can pass through the gaps present between the first positive electrode active material particles and enter into the second region. Therefore, the liquid permeability can be favorable, and the cycle retention rate can be improved.

The first positive electrode active material may be, for example, non-aggregated particles (composite oxide particles) or may be aggregated particles (composite oxide particles), but are preferably aggregated particles. The second positive electrode active material may be aggregated particles (composite oxide particles). It is preferable that the first positive electrode active material and the second positive electrode active material are both aggregated particles (composite oxide particles). The non-aggregated composite oxide particles include particles in which the composite oxide particles are separately present as one primary particle, and particles in which several to dozens of primary particles (specifically, 2 to 19 particles) are aggregated together.

The non-aggregated composite oxide particles, which are hardly crushed and whose surface area therefore are unlikely to increase, are excellent in cycle characteristics, but on the other hand, when subjected to excessive compressive stress, the particles are crushed, and the cycle characteristics may deteriorate in some cases. However, the second region containing much second positive electrode active material serves to relieve the compressive force applied to the first positive electrode mixture layer, and even when a large compressive force is applied to the positive electrode mixture layer, a high cycle retention rate can be realized. Furthermore, by increasing the pressure when rolling, the density of the positive electrode mixture layer can be easily increased.

The aggregated composite oxide particles refer to particles in which dozens of primary particles (specifically, 20 or more particles) are aggregated together, forming a secondary particle. For example, the aggregated composite oxide particles can be each composed of 20 to 5,000,000 (more generally, 10,000 to 5,000,000) primary particles. The aggregated composite oxide particles have a small primary particle diameter and are easily crushed, and therefore, the reaction area with the liquid electrolyte is large. Therefore, a high capacity can be easily obtained. On the other hand, the side reaction with the liquid electrolyte tends to increase, and the cycle retention rate may decrease with repeated charging and discharging. However, according to the present embodiment, the concentrations of the first positive electrode active material and the second positive electrode active material have different distributions between the first region and the second region, and the first positive electrode active material is distributed more in the first region than in the second region, and the second region is distributed more in the second region than in the first region, the decrease in cycle maintenance rate can be suppressed.

In the first positive electrode active material and/or the second positive electrode active material, the particle diameter of the primary particles contained in the aggregated particles, for example, may be, 500 nm or less, and may be in the range of 200 nm to 500 nm. The particle diameter of the primary particles can be determined by observing grain boundaries of the primary particles, based on a SEM photograph of the aggregated composite oxide particles. A plurality of (e.g., 20 or more) primary particles selected are observed for grain boundaries, to identify their contours, and the long diameter of each primary particle is obtained from the contour, to calculate an average value of the long diameter as the particle diameter of the primary particles.

In the first positive electrode active material and/or the second positive electrode active material, the particle diameter of the aggregated particles (the particle diameter of the secondary particles) may be in the range of 5 $\mu$m to 20 $\mu$m, or 5 $\mu$m to 15 $\mu$m. In this case, a high cycle retention rate can be easily realized. The particle diameter of the secondary particles can be determined by observing grain boundaries of the secondary particles, based on a SEM photograph of the composite oxide particles. A plurality of (e.g., 20 or more) secondary particles selected are observed for grain boundaries, to identify their contours, and the long diameter of each secondary particle is obtained from the contour, to calculate an average value of the long diameter as the particle diameter of the secondary particles.

The first region may contain the second positive electrode active material and/or a positive electrode active material having a compressive strength of more than 400 MPa. The content of the first positive electrode active material in the first region may be 50 mass% or more, and may be 70 mass% or more. Likewise, the second region may contain the first positive electrode active material and/or a positive electrode active material having a compressive strength of more than 400 MPa. The content of the second positive electrode active material in the second region may be 50 mass% or more, and may be 70 mass% or more.

The particle diameters and the contents in the positive electrode mixture layer of the first and second positive electrode active materials can be determined as follows by image analysis of a SEM photograph of a cross section of the positive electrode.

First, from the contour images of a particle of the first positive electrode active material and a particle of the second positive electrode active material in the SEM photograph, the area surrounded by each contour is determined. The diameter of a circle (equivalent circle) having the same area as that surrounded by the contour of the first positive electrode active material particle is determined as a particle diameter of each particle i, and the volume of a sphere having the same diameter is regarded as a volume $V_i$ of each particle i. Similarly, the diameter of a circle (equivalent circle) having the same area as that of the contour of the second positive electrode active material particle is determined as a particle diameter of each particle j, and the volume of a sphere having the same diameter is regarded as a volume $V_j$ of each particle j. When the positive electrode active material is substantially composed of two materials, the first positive electrode active material and the second positive electrode active material, given that the densities of the first and second positive electrode active materials are respectively denoted by $\rho1$ and $\rho2$, with the components, such as a binder, contained in a very small amount ignored, a content C1 of the first positive electrode active material in a predetermined region can be determined, by deriving the $V_i$ or $V_j$, with respect to each particle present in the predetermined region in a cross-sectional SEM image of the first positive electrode mixture layer, from the following equation. Similarly, a content C2 of the second positive electrode active material in a predetermined region can be determined, by deriving the $V_i$ or $V_j$, with respect to for each particle present in the predetermined region in a cross-sectional SEM image of the second positive electrode mixture layer, from the following equation.

$$C1 = \Sigma_i \, \rho1 V_i \, / \, (\Sigma_i \, \rho1 V_i + \Sigma_j \, \rho2 V_j)$$

$$C2 = \Sigma_j \, \rho2 V_j \, / \, (\Sigma_i \, \rho1 V_i + \Sigma_j \, \rho2 V_j)$$

The content of the first positive electrode active material in the first or second region may be derived by randomly selecting a plurality of (e.g., 20 or more) small regions in the first or second region, to determine the C1 in each small region, and calculating an average value. Similarly, the content of the second positive electrode active material in the first or second region may be derived by randomly selecting a plurality of (e.g., 20 or more) small regions in the first or second region, to determine the C2 in each small region, and calculating an average value.

The C1 and the C2 satisfy C1 > C2 in the first region, and can satisfy C1 < C2 in the second region. Specifically, the C1 may be 0.5 or more, 0.7 or more, or 0.8 or more in the first region. The C2 may be 0.5 or more, 0.7 or more, or 0.8 or more in the second region.

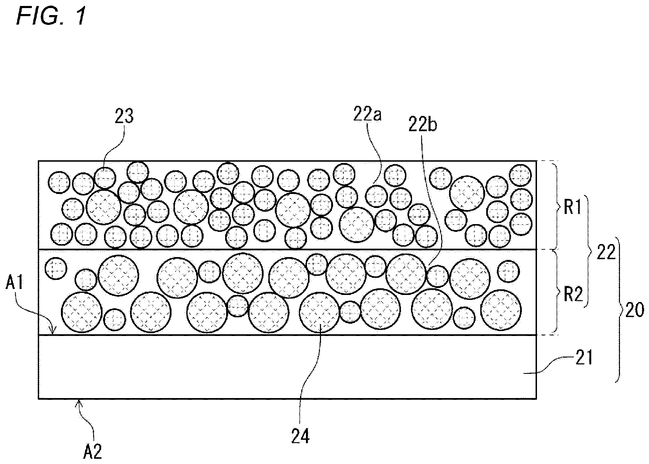

FIG. 1 is a schematic cross-sectional view showing the structure of a positive electrode for a secondary battery according to the present embodiment. A positive electrode 20 for a secondary battery includes a positive electrode current collector 21 and a positive electrode mixture layer 22 (22a, 22b). The positive electrode mixture layer 22 can be formed on both principal surfaces of the positive electrode current collector 21. In FIG. 1, the positive electrode mixture layer 22 formed on a principal surface A1 of the positive electrode current collector 21 is shown, with the illustration of a positive electrode mixture layer formed on a principal surface A2 on the opposite side of the principal surface A1 of the positive electrode current collector 21 not shown.

The positive electrode mixture layer 22 is zoned into a first region R1 and a second region R2 having the same thickness. That is, the first region R1 and the second region R2 each refer to a region whose thickness is half the thickness of the positive electrode mixture layer 22. In this case, the first positive electrode mixture layer 22a is formed in the first region R1, and the second positive electrode mixture layer 22b is formed in the second region R2. The second positive electrode mixture layer 22b is interposed between the positive electrode current collector 21 and the first positive electrode mixture layer 22a. That is, the first positive electrode mixture layer 22a is on the surface side of the positive electrode, and faces the negative electrode. On the other hand, the second positive electrode mixture layer 22b is on the positive electrode current collector 21 side, and faces the principal surface A1 of the positive electrode current collector 21.

The first positive electrode mixture layer 22a contains a first positive electrode active material 23 having a compressive strength of 400 MPa or less. The second positive electrode mixture layer 22b contains a second positive electrode active material 24 having a compressive strength smaller than that of the first positive electrode active material 23. The first positive electrode active material 23 and the second positive electrode active material 24 can be, for example, non-aggregated particles. In FIG. 1, the boundaries between the primary particles in each of the first positive electrode active material 23 and the second positive electrode active material 24 are shown in broken lines.

The second positive electrode active material 24 may be contained in the first positive electrode mixture layer 22a. However, the content of the second positive electrode active material 24 in the first positive electrode mixture layer 22a is smaller than that of the second positive electrode active material 24 in the second positive electrode mixture layer 22b. Likewise, the first positive electrode active material 23 may be contained in the second positive electrode mixture layer 22b. However, the content of the first positive electrode active material 23 in the second positive electrode mixture layer 22b is smaller than that of the first positive electrode active material 23 in the first positive electrode mixture layer 22a.

In the example illustrated in FIG. 1, the second positive electrode mixture layer 22b formed in the second region is nearer to the positive electrode current collector 21 than the first positive electrode mixture layer 22a formed in the first region. However, the positional relationship between the first and second positive electrode mixture layers 22a and 22b (the positional relationship between the first and second regions) may be reversed. That is, the first positive electrode mixture layer 22a may be nearer to the positive electrode current collector 21 than the second positive electrode mixture layer 22b.

In the example illustrated in FIG. 1, both the first positive electrode mixture layer 22a and the second positive electrode mixture layer 22b are half the thickness of the whole positive electrode mixture layer 22, and the boundary between the first positive electrode mixture layer 22a and the second positive electrode mixture layer 22b coincides with the boundary between the first region and the second region. However, the positive electrode mixture layer 22a may be formed thicker than the second positive electrode mixture layer 22b, or conversely, the second positive electrode mixture layer 22b may be formed thicker than the first positive electrode mixture layer 22a. Between the first and second positive electrode mixture layers 22a and 22b, an intermediate layer may be present in which the contents of the first electrode active material 23 and the second positive electrode active material 24 are each in the range between the content in the first positive electrode mixture layer 22a and the content in the second positive electrode mixture layer 22b.

The above positive electrode 20 can be produced by preparing a plurality of kinds of positive electrode slurries differing in the ratio of the content of the second positive electrode active material 24 to that of the first positive electrode active material 23, and applying them to a surface of the positive electrode current collector 21.

Next, the secondary battery according to the embodiment of the present disclosure will be described in detail, with a nonaqueous electrolyte secondary battery taken as an example. The secondary battery includes, for example, a positive electrode, a negative electrode, a liquid electrolyte, and a separator as described below.

[Positive electrode]

The positive electrode includes a positive electrode current collector, and a positive electrode mixture layer formed on a surface of the positive electrode current collector and containing a positive electrode active material. For the positive electrode, the aforementioned positive electrode for a secondary battery having the first positive electrode mixture layer and the second positive electrode mixture layer is used. The first and second positive electrode mixture layers can be each formed by, for example, applying a positive electrode slurry in which a positive electrode mixture including a positive electrode active material, a binder, and the like is dispersed in a dispersion medium, onto a surface of the positive electrode current collector, followed by drying. The dry applied film may be rolled as necessary. The positive electrode mixture layer may be formed on one surface or both surfaces of the positive electrode current collector.

As the positive electrode active material (first positive electrode active material and second positive electrode active material), a lithium-containing composite oxide having a layered rock-salt type crystal structure containing lithium and a transition metal can be used. Specifically, the lithium-containing composite oxide may be, for example, $Li_aNi_{1-x-y}Co_xM_yO_2$ where $0 < a \leq 1.2$, $0 \leq x \leq 0.1$, $0 \leq y \leq 0.1$, $0 < x + y \leq 0.1$, and M is at least one selected from the group consisting of Na, Mg, Sc, Y, Mn, Fe, Cu, Zn, Al, Cr, Pb, Sb, and B. In view of the stability of the crystal structure, Al may be contained as the element represented by M. The value a representing the molar ratio of lithium increases and decreases during charging and discharging. Such a composite oxide is exemplified by a lithium-nickel-cobalt-aluminum composite oxide (e.g., $LiNi_{0.88}Co_{0.09}Al_{0.03}O_2$, $LiNi_{0.9}Co_{0.05}Al_{0.05}O_2$, $LiNi_{0.91}Co_{0.06}Al_{0.03}O_2$).

The first positive electrode active material and the second positive electrode active material are different in compressive strength as described above. However, the material and composition may be the same or different between the first positive electrode active material and the second positive electrode active material. Another positive electrode active material corresponding to neither the first positive electrode active material nor the second positive electrode active material (i.e., an active material having a compressive strength exceeding 400 MPa) may be contained in a predetermined amount in the positive electrode mixture layer.

In the following, a method for producing a lithium-containing composite oxide will be described, with a composite oxide mainly composed of lithium, nickel, and cobalt taken as an example.

The method for producing a lithium-containing composite oxide includes: for example, a composite hydroxide synthesis step of obtaining a Ni-Co-Al composite hydroxide or a Ni-Co-Mn composite hydroxide and the like; a raw material mixing step of mixing the composite hydroxide and a lithium compound, to obtain a raw material mixture; and a firing step of firing the raw material mixture to obtain composite oxide particles.

In the composite hydroxide synthesis step, for example, using a co-precipitation method, an alkaline solution, such as sodium hydroxide, is added dropwise to a solution of a metal salt containing Ni, Co, Al (or Mn), etc. under stirring, until the pH is adjusted to the alkaline side (e.g., 8.5 to 11.5), thereby to allow a Ni-Co-Al composite hydroxide or a Ni-Co-Mn composite hydroxide to be deposited (co-precipitated). The composite hydroxide synthesis step preferably includes an aging step of leaving the deposited composite hydroxide to stand as it is in the reaction solution. This is likely to result in composite oxide particles with larger compressive strength.

In the raw material mixing step, for example, the above composite hydroxide is mixed with a lithium compound, such as lithium hydroxide, lithium carbonate, or lithium nitrate, to obtain a raw material mixture. By adjusting the mixing ratio between the composite hydroxide and the lithium compound, it is possible to control the compressive strength of the finally obtained composite oxide particles. In order to increase the compressive strength within the range of 400 MPa or less, the mixing ratio between the composite hydroxide and the lithium compound may be such that metal elements (Ni + Co + Al or Mn) : Li falls in the range of 1.0 : 1.02 to 1.0 : 1.2 by molar ratio.

In the firing step, for example, the raw material mixture is fired in an oxygen atmosphere, to obtain composite oxide particles. By adjusting the firing temperature of the raw material mixture, too, it is possible to control the compressive strength of the finally obtained composite oxide particles. In order to increase the compressive strength within the range of 400 MPa or less, the firing temperature of the raw material mixture may be set, for example, in the range of 750 °C or more and 1100 °C or less. The firing time is preferably 20 hours to 150 hours, more preferably 20 hours to 100 hours. When the firing time of the composite oxide particles exceeds 150 hours, as compared to when 150 hours or less, for example, a deterioration in material physical properties or electrochemical characteristics may be caused in some cases.

The form and the thickness of the positive electrode current collector may be respectively selected from the forms and the ranges corresponding to those of the negative electrode current collector. The material of the positive electrode current collector may be, for example, stainless steel, aluminum, an aluminum alloy, titanium, and the like.

[Negative electrode]

The negative electrode includes, for example, a negative electrode current collector, and a negative electrode active material layer formed on a surface of the negative electrode current collector. The negative electrode active material layer can be formed by, for example, applying a negative electrode slurry in which a negative electrode mixture including a negative electrode active material, a binder, and the like is dispersed in a dispersion medium, onto a surface of the negative electrode current collector, followed by drying. The dry applied film may be rolled as necessary. That is, the negative electrode active material may be a material mixture layer. Alternatively, a lithium metal foil or a lithium alloy foil may be laminated on the negative electrode current collector. The negative electrode active material layer may be formed on one surface or both surfaces of the negative electrode current collector.

The negative electrode active material layer contains the negative electrode active material as an essential component, and may further include a binder, a conductive agent, a thickener, and the like, as optional components. For the binder, the conductive agent, and the thickener, known materials can be used.

The negative electrode active material includes a material that electrochemically absorbs or releases lithium ions, lithium metal, and/or a lithium alloy. As the material that electrochemically absorbs or releases lithium ions, a carbon material, a silicon-containing material, an alloy-type material, and the like can be used. Examples of the carbon material include graphite, graphitizable carbon (soft carbon), and non-graphitizable carbon (hard carbon). Particularly preferred is graphite, which is stable during charging and discharging and whose irreversible capacity is small. The alloy-type material contains, for example, at least one metal capable of forming an alloy with lithium, examples of which include silicon, tin, a silicon alloy, a tin alloy, and a silicon compound. These may be used in a form combined with oxygen, such as silicon oxide or tin oxide.

Examples of the silicon-containing materials or the alloy-type material include silicon oxide and a silicon-containing alloy compound, but are not limited thereto.

As the negative electrode current collector, a non-porous electrically conductive substrate (e.g., metal foil), and a porous electrically conductive substrate (e.g., mesh, net, punched sheet) are used. The material of the negative electrode current collector may be, for example, stainless steel, nickel, a nickel alloy, copper, a copper alloy, and the like.

[Liquid electrolyte]

The liquid electrolyte contains a solvent and a solute dissolved in the solvent. The solute is an electrolyte salt that ionically dissociates in the liquid electrolyte. The solute can include, for example, a lithium salt. The components of the liquid electrolyte other than the solvent and solute are additives. The liquid electrolyte can contain various additives.

The solvent may be an aqueous solvent or a non-aqueous solvent. As the non-aqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl acetate, ethyl acetate, propyl acetate, methyl propionate (MP), and ethyl propionate (EP). These non-aqueous solvents may be used singly or in combination of two or more kinds.

As the nonaqueous solvent, other than the above, cyclic ethers, chain ethers, nitriles, such as acetonitrile, amides, such as dimethylformamide, can be used.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether.

Examples of the chain ethers include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethyleneglycol dimethylether, diethyleneglycol diethylether, diethyleneglycol dibutylether, 1,1-dimethoxymethane, 1,1-diethoxyethane, triethyleneglycol dimethylether, and tetraethyleneglycol dimethylether.

These solvents may be a fluorinated solvent in which one or more hydrogen atoms are substituted by fluorine atom. As the fluorinated solvent, fluoroethylene carbonate (FEC) may be used.

Examples of the lithium salt include a lithium salt of a chlorine-containing acid (e.g., $LiClO_4$, $LiAlCl_4$, $LiB_{10}Cl_{10}$), a lithium salt of a fluorine-containing acid (e.g., $LiPF_6$, $LiPF_2O_2$, $LiBF_4$, $LiSbF_6$, $LiAsF_6$, $LiCF_3SO_3$, $LiCF_3CO_2$), a lithium salt of a fluorine-containing acid imide (e.g., $LiN(FSO_2)_2$, $LiN(CF_3SO_2)_2$, $LiN(CF_3SO_2)(C_4F_9SO_2)$, $LiN(C_2F_5SO_2)_2$), and a lithium halide (e.g., LiCl, LiBr, LiI). These lithium salts may be used singly or in combination of two or more kinds.

The concentration of the lithium salt in the liquid electrolyte may be 1 mol/liter or more and 2 mol/liter or less, and may be 1 mol/liter or more and 1.5 mol/liter or less. By controlling the lithium salt concentration in the above range, a liquid electrolyte having excellent ion conductivity and appropriate viscosity can be obtained. The lithium salt concentration is not limited to the above.

The liquid electrolyte may contain any other known additives. Examples of the additives include 1,3-propanesarton, methyl benzenesulfonate, cyclohexylbenzene, biphenyl, diphenyl ether, and fluorobenzene.

[Separator]

A separator is interposed between the positive electrode and the negative electrode. The separator is excellent in ion permeability and has moderate mechanical strength and electrically insulating properties. As the separator, for example, a microporous thin film, a woven fabric, a nonwoven fabric, and the like can be used. A preferred material of the separator is polyolefin, such as polypropylene and polyethylene.

In an exemplary structure of the secondary battery, an electrode group formed by winding a positive electrode and a negative electrode with a separator interposed therebetween is housed together with a nonaqueous electrolyte in an outer body. The wound-type electrode group may be replaced with a different form of the electrode group, such as a stacked-type electrode group formed by stacking a positive electrode and a negative electrode with a separator interposed therebetween. The secondary battery may be of any type, such as a cylindrical, prismatic, coin, button, or laminate type.

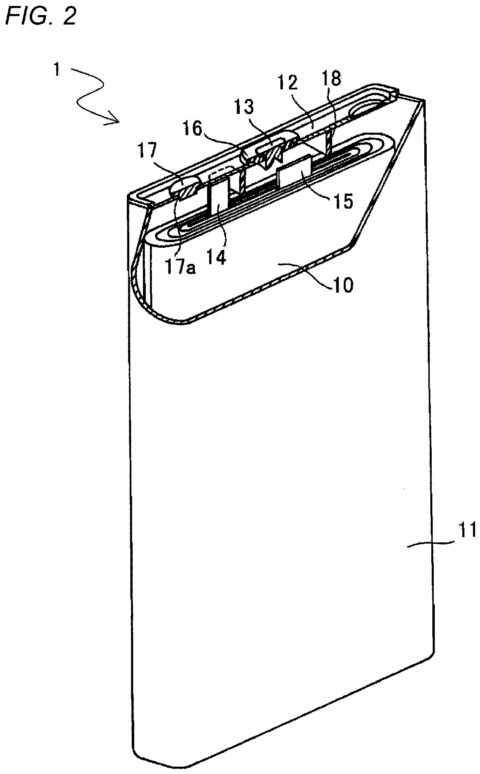

FIG. 2 is a partially cut-away schematic oblique view of a prismatic secondary battery according to an embodiment of the present disclosure.

The battery includes a bottomed prismatic battery case 11, and an electrode group 10 and a nonaqueous electrolyte (not shown) housed in the battery case 11. The electrode group 10 has a long negative electrode, a long positive electrode, and a separator interposed therebetween and preventing them from directly contacting with each other. The electrode group 10 is formed by winding the negative electrode, the positive electrode, and the separator around a flat plate-like winding core, and then removing the winding core.

To the negative electrode current collector of the negative electrode, a negative electrode lead 15 is attached at its one end, by means of welding or the like. To the positive electrode current collector of the positive electrode, a positive electrode lead 14 is attached at its one end, by means of welding or the like. The negative electrode lead 15 is electrically connected at its other end to a negative electrode terminal 13 disposed at a sealing plate 12. A gasket 16 is disposed between the sealing plate 12 and the negative electrode terminal 13, providing electrical insulation therebetween. The positive electrode lead 14 is connected at its other end to the sealing plate 12, and electrically connected to the battery case 11 serving as a positive electrode terminal. A resin frame 18 that separates the electrode group 10 from the sealing plate 12 and also separates the negative electrode lead 15 from the battery case 11 is disposed above the electrode group 10. The opening of the battery case 11 is sealed with the sealing plate 12. The sealing plate 12 is provided with a liquid inlet 17a, and the electrolyte is injected through the liquid inlet 17a into the prismatic battery case 11. The liquid inlet 17a is then closed with a sealing plug 17.

The structure of the secondary battery may be of a cylindrical shape, a coin shape, a button shape or the like including a battery case made of metal, and may be of a laminate type including a battery case made of a laminated sheet which is a laminate of a barrier layer and a resin sheet. In the present disclosure, the type, shape, and the like of the secondary battery are not limited.

The present disclosure will be specifically described below with reference to Examples and Comparative Examples. It is to be noted, however, the present disclosure is not limited to the following Examples.

<Example 1>

[Synthesis of first positive electrode active material]

$[Ni_{0.88}Co_{0.09}Al_{0.03}](OH)_2$ synthesized by a coprecipitation method and LiOH were mixed in a molar ratio of Li to the sum of Ni, Co and Al of 1.1:1.0, with Ishikawa's grinding mortar. The mixture was then fired in an oxygen atmosphere so that the compressive strength became 220 MPa, to obtain a first positive electrode active material.

The first positive electrode active material was embedded in a resin, and subjected to a cross-section polisher (CP) processing, to prepare a cross section, and the cross section was observed with a SEM. The result found that the composite oxide particles were present in an aggregated state. The diameter of the particles of the first positive electrode active material (i.e., the particle diameter of the secondary particles) calculated by the above method was approximately 10 $\mu$m, and the particle diameter of the primary particles was approximately 300 nm.

[Synthesis of second positive electrode active material]

$[Ni_{0.88}Co_{0.09}Al_{0.03}](OH)_2$ synthesized by a coprecipitation method and LiOH were mixed in a molar ratio between Li and the sum of Ni, Co and Al of 1.1:1.0, with Ishikawa's grinding mortar. The mixture was then fired in an oxygen atmosphere so that the compressive strength became 145 MPa, to obtain a second positive electrode active material.

The obtained second positive electrode active material was embedded in a resin, and subjected to a cross-section polisher (CP) processing, to prepare a cross section, and the cross section was observed with a SEM. The result found that the second positive electrode active material was present in an aggregated state. The diameter of the particles of the second positive electrode active material (i.e., the particle diameter of the secondary particles) calculated by the above method was approximately 10 $\mu$m, and the particle diameter of the primary particles was approximately 300 nm.

[Production of positive electrode]

The first positive electrode active material, the second positive electrode active material, acetylene black, polyvinylidene fluoride, and N-methyl-2-pyrrolidone (NMP) were mixed in a predetermined mass ratio so that the mass ratio between the first positive electrode active material and the second positive electrode active material became 8:2, to prepare a first positive electrode slurry. Similarly, the first positive electrode active material, the second positive electrode active material, acetylene black, polyvinylidene fluoride, and N-methyl-2-pyrrolidone (NMP) were mixed in a predetermined mass ratio so that the mass ratio between the first positive electrode active material and the second positive electrode active material became 2:8, to prepare a second positive electrode slurry.

Next, the second positive electrode slurry was applied onto a surface of an aluminum foil serving as a positive electrode current collector, and the first positive electrode slurry was further applied thereon. The applied amounts of the first positive electrode slurry and the second positive electrode slurry were set the same. The applied films were dried, and then rolled, to form a positive electrode mixture layer having a first positive electrode mixture layer (upper layer) containing the first positive electrode active material and a second positive electrode mixture layer (lower layer) containing the second positive electrode active material, on each of both surfaces of the aluminum foil. The density after rolling of the positive electrode mixture layer as a whole, including the first and second positive electrode mixture layers, was 3.5 g/cm$^3$. The thicknesses of the first positive electrode mixture layer and the second positive electrode mixture layer were approximately the same. Therefore, the first positive electrode mixture layer corresponded to the first region, and the second positive electrode mixture layer corresponded to the second region.

[Preparation of liquid electrolyte]

LiPF$_6$ was added as a lithium salt in a mixed solvent containing ethyl methyl carbonate (EMC) and ethylene carbonate (EC) in a volume ratio of 70:30, to prepare a liquid electrolyte. The concentration of LiPF$_6$ in the nonaqueous liquid electrolyte was set to 1.0 mol/liter.

[Fabrication of secondary battery]

A lead tab was attached to each electrode, and the positive electrode and a lithium metal foil serving as a counter electrode were spirally wound with a separator interposed therebetween, such that the lead was placed at the outermost layer, to prepare an electrode group. The electrode group was inserted into an outer body made of a laminated film having an aluminum foil as a barrier layer, and vacuum-dried at 105 °C for 2 hours, and then, the nonaqueous liquid electrolyte was injected thereinto. The opening of the outer body was sealed, to complete a battery A1 for evaluation.

<Comparative Example 1>

In the production of a positive electrode, only the first positive electrode slurry was applied, and the applied film was dried, and then rolled, to form a positive electrode mixture layer having the first positive electrode mixture layer on each of both surfaces of the aluminum foil. The applied amount of the first positive electrode slurry was set the same as the sum of the applied amounts of the first and second positive electrode slurries in Example 1.
Except for the above, a secondary battery was produced in the same manner as in Example 1, to obtain a battery B1 for evaluation.

<Comparative Example 2>

In the production of a positive electrode, only the second positive electrode slurry was applied, and the applied film was dried, and then rolled, to form a positive electrode mixture layer having the second positive electrode mixture layer on each of both surfaces of the aluminum foil. The applied amount of the second positive electrode slurry was set the same as the sum of the applied amounts of the first and second positive electrode slurries in Example 1.
Except for the above, a secondary battery was produced in the same manner as in Example 1, to produce a battery B2 for evaluation.

<Example 2>

In the production of a positive electrode, the first positive electrode slurry was applied onto a surface of an aluminum foil serving as a positive electrode current collector, and then, the second positive electrode slurry was further applied thereon. The applied amounts of the first positive electrode slurry and the second positive electrode slurry were the same as those in Example 1, respectively. The applied films were dried, and then rolled, to form a positive electrode mixture layer having a first positive electrode mixture layer (lower layer) containing the first positive electrode active material and a second positive electrode mixture layer (upper layer) containing the second positive electrode active material, on each of both surfaces of the aluminum foil. In the present Example, the laminating order of the first positive electrode mixture layer and the second positive electrode mixture layer was reversed, and the first positive electrode mixture layer was on the positive electrode current collector side. The density after rolling of the positive electrode mixture layer as a whole, including the first and second positive electrode mixture layers, was 3.5 g/cm$^3$. The thicknesses of the first positive electrode mixture layer and the second positive electrode mixture layer were approximately the same, and the first positive electrode mixture layer and the second positive electrode mixture layer corresponded to the second region and the first region, respectively.
Except for the above, a secondary battery was produced in the same manner as in Example 1, to obtain a battery A2 for evaluation.

[Evaluation]

(Initial charging and discharging)

Each of the completed batteries was placed in a 25 °C environment, and was constant-current charged at a current of 0.3 It until the voltage reached 4.3 V, and then, constant-voltage charged at a constant voltage of 4.3 V until the current reached 0.02 It. Thereafter, the battery was constant-current discharged at a current of 0.5 It until the voltage dropped to 2.5 V, to determine an initial capacity $C_0$. The charging and discharging were performed in a 25 °C environment.

(Capacity retention rate)

With the rest time between charging and discharging set to 10 minutes, in a 25 °C environment, the charging and discharging were repeated 25 cycles under the above charge-discharge conditions, to determine a discharge capacity $C_1$ at the 25th cycle. A deterioration rate R calculated using the discharge capacity $C_1$ and the initial discharge capacity $C_0$ from the following equation was evaluated.

$$\text{Deterioration rate R (\%)} = (1 - C_1/C_0) \times 100$$

The evaluation results of the deterioration rate R for batteries A1, A2, B1, and B2 are shown in Table 1. In Table 1, the compressive strength of the positive electrode active material in the positive electrode mixture layer used in each battery is also shown. Table 1 shows that in the batteries A1 and A2 in which the positive electrode mixture layer was formed in two layers of a first positive electrode mixture layer containing a first positive electrode active material and a second positive electrode mixture layer containing a second positive electrode active material, as compared to in the batteries B1 and B2 in which the positive electrode mixture layer was formed in one layer of the first or second positive electrode mixture layer, the deterioration in cycle characteristics was suppressed, and the deterioration rate was lowered. The battery A1 in which the first positive electrode active material was disposed on the surface side (upper layer) of the positive electrode mixture layer and the second positive electrode active material was disposed on the current collector side (lower layer) showed a low deterioration rate, as compared to the battery A2 in which the first positive electrode active material was disposed on the current corrector side and the second positive electrode active material was disposed on the surface side. A presumable reason why the deterioration rate of the battery B1 was higher than that of the battery B2 was that in the battery B1, because of a high compressive strength of the positive electrode, the positive electrode had to be compressed very strongly, which caused local variations in compression and decrease in smoothness of the electrode plate.

[Table 1]

| | positive electrode active material compressive strength | | deterioration rate R / [%] |
|---|---|---|---|
| | upper layer | lower layer | |
| A1 | 220 MPa | 145 MPa | 3.8 |
| A2 | 145 MPa | 220 MPa | 4.2 |
| B1 | 220 MPa | | 5.2 |
| B2 | 145 MPa | | 4.6 |

[Industrial Applicability]

According to the secondary battery according to the present disclosure, it is possible to provide a nonaqueous electrolyte secondary battery having high capacity and excellent cycle characteristics. The secondary battery according to the present disclosure is useful as a main power source for mobile communication devices, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: nonaqueous electrolyte secondary battery, 10: electrode group, 11: battery case, 12: sealing plate, 13: negative electrode terminal, 14: positive electrode lead, 15: negative electrode lead, 16: gasket, 17: sealing plug, 17a: liquid inlet, 18: frame, 20: positive electrode, 21: positive electrode current collector, 22: positive electrode mixture layer, 22a: first positive electrode mixture layer, 22b: second positive electrode mixture layer, 23: first positive electrode active material, 24: second positive electrode active material

**Claims**

1. A positive electrode for a secondary battery, comprising:

    a positive electrode current collector; and a positive electrode mixture layer containing a positive electrode active material and disposed on a surface of the positive electrode current collector, wherein
    the positive electrode mixture layer contains a first positive electrode active material having a compressive strength of 400 MPa or less, and a second positive electrode active material having a compressive strength smaller than the compressive strength of the first positive electrode active material, and
    when the positive electrode mixture layer is zoned into a first region and a second region having the same thickness, the first positive electrode active material is contained more in the first region than in the second region, and the second positive electrode active material is contained more in the second region than in the first region.

2. The positive electrode for a secondary battery according to claim 1, wherein the compressive strength of the second positive electrode active material is 3/4 times or less as large as the compressive strength of the first positive electrode active material.

3. The positive electrode for a secondary battery according to claim 1 or 2, wherein the compressive strength of the second positive electrode active material is 150 MPa or less.

4. The positive electrode for a secondary battery according to any one of claims 1 to 3, wherein the compressive strength of the first positive electrode active material is 200 MPa or more.

5. The positive electrode for a secondary battery according to any one of claims 1 to 4, wherein the second region is nearer to the positive electrode current collector than the first region.

6. The positive electrode for a secondary battery according to any one of claims 1 to 5, wherein

    the first positive electrode active material and the second positive electrode active material are both aggregated particles each composed of primary particles aggregated together, and
    the primary particles have a particle diameter of 500 nm or less.

7. The positive electrode for a secondary battery according to any one of claims 1 to 6, wherein a content of the first positive electrode active material in the first region is 50 mass% or more.

8. The positive electrode for a secondary battery according to any one of claims 1 to 7, wherein a content of the second positive electrode active material in the second region is 50 mass% or more.

9. A secondary battery, comprising:

    the positive electrode for a secondary battery according to any one of claims 1 to 8;
    a separator; a negative electrode facing the positive electrode for a secondary battery with the separator interposed therebetween; and a liquid electrolyte.

FIG. 1

FIG. 2

## INTERNATIONAL SEARCH REPORT

International application No.

**PCT/JP2022/035822**

### A. CLASSIFICATION OF SUBJECT MATTER

*H01M 4/13*(2010.01)i; *H01M 4/36*(2006.01)i; *H01M 10/052*(2010.01)i; *H01M 10/0566*(2010.01)i
FI: H01M4/13; H01M4/36 D; H01M10/052; H01M10/0566

According to International Patent Classification (IPC) or to both national classification and IPC

### B. FIELDS SEARCHED

Minimum documentation searched (classification system followed by classification symbols)

H01M4/13; H01M4/36; H01M10/052; H01M10/0566

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-58309 A (TOYOTA MOTOR CORP) 21 April 2016 (2016-04-21) | 1-9 |
| A | JP 2021-114408 A (SUMITOMO CHEMICAL COMPANY, LIMITED) 05 August 2021 (2021-08-05) | 1-9 |
| A | JP 2013-65468 A (PANASONIC CORP) 11 April 2013 (2013-04-11) | 1-9 |
| A | WO 2019/198351 A1 (PANASONIC INTELLECTUAL PROPERTY MANAGEMENT CO., LTD.) 17 October 2019 (2019-10-17) | 1-9 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 October 2022** | **08 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/035822**

| Patent document cited in search report | | | Publication date (day/month/year) | Patent family member(s) | | | Publication date (day/month/year) |
|---|---|---|---|---|---|---|---|
| JP | 2016-58309 | A | 21 April 2016 | US | 2017/0256788 | A1 | |
| | | | | WO | 2016/038440 | A1 | |
| | | | | KR | 10-2017-0042679 | A | |
| | | | | CN | 106716688 | A | |
| JP | 2021-114408 | A | 05 August 2021 | US | 2021/0226209 | A1 | |
| | | | | EP | 3852170 | A1 | |
| | | | | CN | 112768680 | A | |
| | | | | KR | 10-2021-0093173 | A | |
| JP | 2013-65468 | A | 11 April 2013 | (Family: none) | | | |
| WO | 2019/198351 | A1 | 17 October 2019 | US | 2021/0167396 | A1 | |
| | | | | CN | 111937195 | A | |

Form PCT/ISA/210 (patent family annex) (January 2015)

## REFERENCES CITED IN THE DESCRIPTION

**Patent documents cited in the description**

- WO 2021153397 A

**Non-patent literature cited in the description**

- *Journal of the Mining and Metallurgical Institute of Japan,* December 1965, vol. 81 (932), 1024-1030